# EUROPÄISCHE PATENTANMELDUNG

(11) **EP 2 096 363 A2**
(43) Veröffentlichungstag der Anmeldung: **02.09.2009**
(21) Anmeldenummer: 09002231.0
(22) Anmeldetag: 18.02.2009
(51) Int. Cl.: F24D 19/10

(54) **Verfahren zum Betreiben einer Solaranlage**

(30) Priorität: 26.02.2008 DE 102008011105
(71) Anmelder: Robert Bosch GmbH, 70442 Stuttgart (DE)
(72) Erfinder: Klein, Rudolf, 35457 Lollar (DE); Kessler, Arno, 35649 Bischoffen (DE)

(57) **Zusammenfassung**

Die Erfindung betrifft ein Verfahren zum Betreiben einer Solaranlage mit einer Regeleinrichtung (5), bei einem solarthermischen System mit mindestens einem Sonnenkollektor (1), mit Temperaturfühlern (2), mit mindestens einer Pumpe (3) für ein Wärmeträgermedium in einem Wärmeträgerkreislauf durch einen Wärmetauscher in einem Warmwasserspeicher (4) oder einem externen Wärmeübertrager, sowie bei einem photovoltaischen System mit mindestens einem Photovoltaikmodul (10) zur Stromerzeugung und einem Wechselrichter (11) für die Stromeinspeisung in das öffentliche Stromnetz.

Der Erfindung liegt die Aufgabe zugrunde, bei einer Solaranlage einen guten Gesamtwirkungsgrad zu erreichen und insbesondere den elektrischen Energieverbrauch zu optimieren.

Das Verfahren ist **dadurch gekennzeichnet, dass** die Regeleinrichtung (5) und/oder der Wechselrichter (11) in der Nacht und in Zeiten ohne nennenswerten Solarertrag abgeschaltet und erst eingeschaltet werden, wenn ein ausreichender Solarertrag vorliegt oder zu erwarten ist.

## Beschreibung

Die Erfindung betrifft ein Verfahren zum Betreiben einer Solaranlage nach dem Oberbegriff des Patentanspruches 1.

Solarthermische Systeme bestehen aus mindestens einem Sonnenkollektor, welcher in einen Wärmeträgerkreislauf integriert ist. Mit einer Pumpe wird dabei das Wärmeträgermedium durch einen Wärmetauscher, der in der Regel im unteren Bereich eines Wasserspeichers angeordnet ist, gefördert. Es gibt bivalente Speicher, also mit einem weiteren Wärmetauscher, meistens im oberen Bereich, zur Nachladung durch einen Heizkessel und Schichtenspeicher mit speziellen Wasserleitelementen. Auch gibt es Anlagen, bei denen Wärme aus dem solaren Wärmeträgerkreislauf über einen externen Wärmeübertrager an einen anderen Kreislauf mit einem Wärmeverbraucher abgegeben wird.

Geregelt werden derartige Systeme nach den Werten von Temperaturfühlern, beispielsweise der Temperaturdifferenz zwischen Kollektor- und Speichertemperaturfühler, welcher meistens im unteren Bereich des Speichers angeordnet ist. Dies betrifft den Pumpenbetrieb mit Ein-/Aus-Taktung und/oder die Pumpendrehzahlregelung. Dazu ist eine Regeleinrichtung vorgesehen, welche entweder in einem Heizungsregler integriert sein kann, oder bei autark arbeitenden Solaranlagen separat installiert und ans Stromnetz angeschlossen ist. Die Regeleinrichtung ist bisher immer in Betriebsbereitschaft, so dass beispielsweise Displays, Anzeigen, Kontrollleuchten und natürlich der Transformator immer Strom verbrauchen.

Ähnliches trifft auch für photovoltaische Systeme mit mindestens einem Photovoltaikmodul zur Stromerzeugung und einem Wechselrichter für die Stromeinspeisung in das öffentliche Stromnetz zu. Hier ist der Wechselrichter bisher immer in Betriebsbereitschaft und verbraucht Strom.

Generell gewinnt die Bewertung des elektrischen Energieverbrauchs von Heizungsanlagen, solarthermischen und photovoltaischen Systemen sowohl bei Kauf- und Auswahlentscheidungen als auch für Abrechnungszwecke bei den Betreibern der Anlagen zunehmend an Bedeutung. Es besteht aber bisher keinerlei Möglichkeit, bei autark arbeitenden Systemen die Bereitschaftsverluste der Regeleinrichtung oder des Wechselrichters, also den Stromverbrauch während der Stillstandszeiten der Systeme, zu minimieren. Begründet ist dies darin, dass mit den bekannten, für den Betrieb der Solarsysteme erforderlichen Sensoren, bisher keine Überwachungsmöglichkeit für die Wiedereinschaltung bei vorhandenem oder zu erwartendem Solarertrag besteht, wenn das vorhandene Netzteil der Regeleinrichtung oder des Wechselrichters außer Betrieb gesetzt ist.

Der Erfindung liegt die Aufgabe zugrunde, bei einer Solaranlage einen guten Gesamtwirkungsgrad zu erreichen und insbesondere den elektrischen Energieverbrauch zu optimieren.

Erfindungsgemäß wurde dies mit den Merkmalen des Patentanspruches 1 gelöst. Vorteilhafte Weiterbildungen sind den Unteransprüchen zu entnehmen.

Das Verfahren zum Betreiben einer Solaranlage ist **dadurch gekennzeichnet, dass** die Regeleinrichtung und/oder der Wechselrichter in der Nacht und in Zeiten ohne nennenswerten Solarertrag abgeschaltet und erst eingeschaltet werden, wenn ein ausreichender Solarertrag vorliegt oder zu erwarten ist.

In einer ersten Ausführungsform ist eine zusätzliche, vom geregelten Solarsystem unabhängige Photovoltaikzelle vorgesehen, welche Strom zum Schalten eines Relais erzeugt, mit dem Regeleinrichtung und/oder Wechselrichter ein- und ausgeschaltet werden. Diese zusätzliche Photovoltaikzelle ist so dimensioniert, dass Regeleinrichtung und/oder Wechselrichter bei ausreichender Stromlieferung über diese zusätzliche Photovoltaikzelle eingeschaltet und/oder bei nicht ausreichender Stromlieferung abgeschaltet werden.

Speziell bei einem photovoltaischen System mit mindestens einem Photovoltaikmodul zur Stromerzeugung werden der vom Photovoltaikmodul erzeugte Strom und/oder die Spannung gemessen, ausgewertet und zum Schalten eines Relais für die Netzspannungsversorgung von Regeleinrichtung und/oder Wechselrichter verwendet. Die aktuell in der Anlage erzeugte elektrische Energie ist also direkt der Indikator, ob der Betrieb einer Regeleinrichtung und/oder eines Wechselrichter aktuell lohnt oder nicht. Dabei werden beim Überschreiten eines vorgebbaren Spannungs- und/oder Stromschwellwertes die Regeleinrichtung und/oder der Wechselrichter eingeschaltet und beim Unterschreiten dieses Wertes ausschaltet.

Ein Knopfthermostat kann in einer zweiten Ausführungsform zum Einsatz kommen. Er wird auf der Glasfläche oder im Bereich des Absorbers eines Sonnenkollektors angebracht. Beim Überschreiten einer am Thermostat festlegbaren Temperaturschwelle schaltet der Knopfthermostat die Regeleinrichtung ein und beim Unterschreiten aus.

In einer dritten Ausführungsform ist eine zusätzliche, vom geregelten Solarsystem unabhängige Schaltuhr mit einem sehr geringem Stromverbrauch vorgesehen, um die Regeleinrichtung und/oder den Wechselrichter zeitabhängig ein- oder auszuschalten. In der Schaltuhr oder einer zusätzlichen Regeleinrichtung können zusätzlich noch markante Werte für zu erwartenden Solarertrag, insbesondere Wetterdaten und Zeiten für Sonnenauf- und Sonnenuntergang, hinterlegt sein oder empfangen werden.

Vorteilhafterweise können auch Ein- und Ausschaltwerte gespeichert und vom Vortag auf den Folgetag übertragen werden, um beispielsweise Sonnenauf- und Sonnenuntergangszeiten genau zu erfassen. Gleiches gilt auch für Beschattungszeiten, wenn zum Beispiel auf Grund einer ungünstigen baulichen Situation die Sonnenkollektoren oder Photovoltaikmodule tages- oder jahreszeitbedingt wegen Schatten keinen Ertrag liefern. Dann können Regeleinrichtung und/oder Wechselrichter eventuell sogar auch tagsüber zu gewissen Zeiten abgeschaltet werden.

In einer weiteren Ausführungsform ist ein Helligkeitssensor vorgesehen, welcher beim Überschreiten einer festlegbaren Helligkeitsschwelle die Regeleinrichtung und/oder den Wechselrichter einschaltet und beim Unterschreiten diese ausschaltet.

Mit dem erfindungsgemäßen Verfahren wird bei einer Solaranlage ein guter Gesamtwirkungsgrad erreicht und insbesondere der elektrische Energieverbrauch zu optimiert. Gerade weil die Bewertung des elektrischen Energieverbrauchs von Heizungsanlagen, solarthermischen und photovoltaischen Systemen zunehmend Bedeutung gewinnt, steht erfindungsgemäß eine einfache Möglichkeit für erhebliche Stromverbrauchs-Einsparungen durch gezieltes Abschalten zur Verfügung. Bei einer thermischen Solaranlage für ein kleineres Gebäude verbraucht die Pumpe beispielsweise 60 % und die Regeleinrichtung 40 % der elektrischen Energie. Da ein Solarertrag in Mitteleuropa etwa nur für eine durchschnittliche Sonnenscheindauer von rund 1500 Stunden in einem Jahr mit 8760 Stunden zu erwarten ist, lassen sich erhebliche Kostensenkungen durch Abschaltung von elektrischen Energieverbrauchern, insbesondere von Regeleinrichtungen und/oder Wechselrichtern, erreichen.

Die erfindungsgemäß vorgeschlagenen Maßnahmen sind bei autark arbeitenden Solaranlagen ohne Eingriffe in bestehende Regeleinrichtungen bzw. Regelkreise realisierbar. Sie können vorhandene Geräte und Systeme ergänzen oder auch gleich bei einer Neuinstallation vorgesehen werden.

Die Zeichnung stellt ein Ausführungsbeispiel der Erfindung das. Es zeigt:
- Fig. 1:: ein solarthermisches System und
- Fig. 2:: ein photovoltaisches System

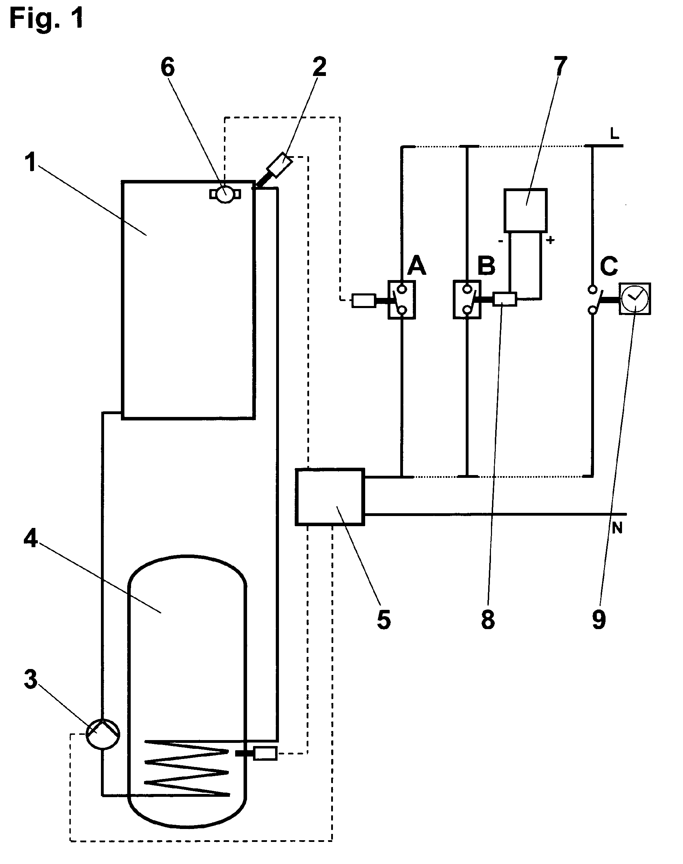

Ein solarthermisches System gemäß Fig. 1 besteht im Wesentlichen aus einem Sonnenkollektor 1, einem Temperaturfühler 2, einer Pumpe 3 für ein Wärmeträgermedium in einem Wärmeträgerkreislauf durch einen Wärmetauscher in einem Warmwasserspeicher 4.
Eine Regeleinrichtung 5 kann mit verschiedenen Maßnahmenvarianten in der Nacht und in Zeiten ohne nennenswerten Solarertrag abgeschaltet und erst eingeschaltet werden, wenn ein ausreichender Solarertrag vorliegt oder zu erwarten ist.

Bei Variante A ist ein Knopfthermostat 6 auf der Glasfläche des Sonnenkollektors 1 vorgesehen, welches beim Überschreiten einer festlegbaren Temperaturschwelle die Regeleinrichtung 5 einschaltet und beim Unterschreiten diese ausschaltet. Variante B sieht eine zusätzliche, vom geregelten Solarsystem unabhängige Photovoltaikzelle 7 vor, welche Strom zum Schalten eines Relais 8 erzeugt, mit dem die Regeleinrichtung bei ausreichender Stromproduktion ein- und ansonsten ausgeschaltet wird. Bei Variante C ist eine zusätzliche, vom geregelten Solarsystem unabhängige Schaltuhr 9 mit geringem Stromverbrauch vorgesehen, mit der Regeleinrichtung 5 zeitabhängig ein- oder ausgeschaltet werden.

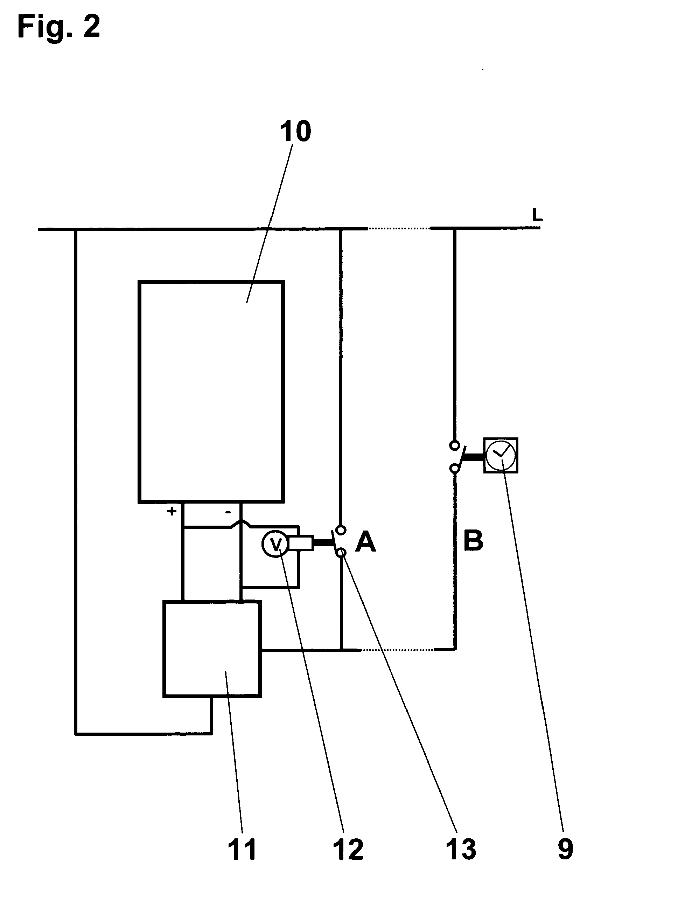

Ein photovoltaisches System gemäß Fig. 2 besteht im Wesentlichen aus einem Photovoltaikmodul 10 zur Stromerzeugung und einem Wechselrichter 11 für die Stromeinspeisung in das öffentliche Stromnetz. Der Wechselrichter 11 wird in der Nacht und in Zeiten ohne nennenswerten Solarertrag abgeschaltet und erst eingeschaltet, wenn ein ausreichender Solarertrag vorliegt oder zu erwarten ist, und zwar in Variante A durch Messung des vom Photovoltaikmodul 10 erzeugten Stromes und/oder der Spannung mit einer Messeinrichtung 12. Dieser Messwert wird ausgewertet und zum Schalten eines Relais 13 für die Netzspannungsversorgung des Wechselrichters 11 verwendet. Beim Überschreiten eines vorgebbaren Spannungs- und/oder Stromschwellwertes wird der Wechselrichter 11 ein- und beim Unterschreiten dieses Wertes ausgeschaltet. Variante B sieht ebenfalls eine zusätzliche, vom geregelten Solarsystem unabhängige Schaltuhr 9 mit geringem Stromverbrauch vor, mit welcher der Wechselrichters 11 zeitabhängig ein- oder ausgeschaltet werden kann.

## Patentansprüche

1. Verfahren zum Betreiben einer Solaranlage, mit einer Regeleinrichtung (5), bei einem solarthermischen System mit mindestens einem Sonnenkollektor (1), mit Temperaturfühlern (2), mit mindestens einer Pumpe (3) für ein Wärmeträgermedium in einem Wärmeträgerkreislauf durch einen Wärmetauscher in einem Warmwasserspeicher (4) oder einem externen Wärmeübertrager, sowie bei einem photovoltaischen System mit mindestens einem Photovoltaikmodul (10) zur Stromerzeugung und einem Wechselrichter (11) für die Stromeinspeisung in das öffentliche Stromnetz,
**dadurch gekennzeichnet, dass** die Regeleinrichtung (5) und/oder der Wechselrichter (11) in der Nacht und in Zeiten ohne nennenswerten Solarertrag abgeschaltet und erst eingeschaltet werden, wenn ein ausreichender Solarertrag vorliegt oder zu erwarten ist.

2. Verfahren nach Anspruch 1,
**dadurch gekennzeichnet, dass** eine zusätzliche, vom geregelten Solarsystem unabhängige Photovoltaikzelle (7) vorgesehen ist, welche Strom zum Schalten eines Relais (8) erzeugt, mit dem Regeleinrichtung (5) und/oder Wechselrichter (11) ein- und ausgeschaltet werden.

3. Verfahren nach Anspruch 1 oder 2,
**dadurch gekennzeichnet, dass** die zusätzliche, vom geregelten Solarsystem unabhängige Photovoltaikzelle (7) so dimensioniert ist, dass Regeleinrichtung (5) und/oder Wechselrichter (11) bei ausreichender Stromlieferung dieser zusätzlichen Photovoltaikzelle (7) eingeschaltet und/oder bei nicht ausreichender Stromlieferung abgeschaltet werden.

4. Verfahren nach Anspruch 1,
**dadurch gekennzeichnet, dass** bei einem photovoltaischen System mit mindestens einem Photovoltaikmodul (10) zur Stromerzeugung werden der vom Photovoltaikmodul (10) erzeugte Strom und/oder die Spannung gemessen, ausgewertet und zum Schalten eines Relais (13) für die Netzspannungsversorgung von Regeleinrichtung (5) und/oder Wechselrichter (11) verwendet, wobei beim Überschreiten eines vorgebbaren Spannungs- und/oder Stromschwellwertes Regeleinrichtung (5) und/oder Wechselrichter (11) eingeschaltet und beim Unterschreiten dieses Wertes ausschaltet werden.

5. Verfahren nach Anspruch 1,
**dadurch gekennzeichnet, dass** ein Knopfthermostat (6) auf der Glasfläche oder im Bereich des Absorbers eines Sonnenkollektors (1) vorgesehen ist, welches beim Überschreiten einer am Thermostat (6) festlegbaren Temperaturschwelle die Regeleinrichtung (5) einschaltet und beim Unterschreiten diese ausschaltet.

6. Verfahren nach einem der Ansprüche 1 bis 5,
**dadurch gekennzeichnet, dass** eine zusätzliche, vom geregelten Solarsystem unabhängige Schaltuhr (9) mit geringem Stromverbrauch vorgesehen ist, mit der Regeleinrichtung (5) und/oder Wechselrichter (11) zeitabhängig ein- oder ausgeschaltet werden.

7. Verfahren nach einem der Ansprüche 1 bis 6,
**dadurch gekennzeichnet, dass** in der Schaltuhr (9) oder einer zusätzlichen Regeleinrichtung markante Werte für zu erwartenden Solarertrag, insbesondere Wetterdaten und Zeiten für Sonnenauf- und Sonnenuntergang, hinterlegt sind oder empfangen werden.

8. Verfahren nach einem der Ansprüche 1 bis 7,
**dadurch gekennzeichnet, dass** Ein- und Ausschaltwerte gespeichert und vom Vortag auf den Folgetag übertragen werden.

9. Verfahren nach Anspruch 1,
**dadurch gekennzeichnet, dass** ein Helligkeitssensor vorgesehen ist, welcher beim Überschreiten einer festlegbaren Helligkeitsschwelle Regeleinrichtung (5) und/oder Wechselrichter (11) einschaltet und beim Unterschreiten diese ausschaltet.
